# EUROPEAN PATENT SPECIFICATION

(11) **EP 3 043 740 B1**
(45) Date of publication and mention of the grant of the patent: **09.01.2019**
(21) Application number: 14747746.7
(22) Date of filing: 27.06.2014
(51) Int. Cl.: A61C 5/85, A61C 13/15, H01L 25/075, A61C 7/14, A61C 19/06

(54) **THIN LED FILM-BASED CURING LIGHT SYSTEM**
LICHTHÄRTUNGSSYSTEM MIT EINEM DÜNNEN LED-FILM
SYSTÈME DE PHOTOPOLYMÉRISATION À BASE DE FILM DE LED MINCE

(30) Priority: 27.06.2013 US 201361839897 P
(43) Date of publication of application: 20.07.2016
(73) Proprietor: DENTSPLY SIRONA Inc., York, PA 17401-2991 (US); Jin, Xiaoming, Middletown, DE 19709 (US); Pieroni, Robert, J., Georgetown, DE 19947 - 67 45 (US)
(72) Inventor: JIN, Xiaoming, Middletown, DE 19709 (US); PIERONI, Robert, J., Georgetown, DE 19947 - 67 45 (US)
(74) Representative: Hartz, Nikolai
(86) International application number: PCT/US2014/044538
(87) International publication number: WO 2014/210439

(56) References cited:
- WO-A1-2010/078581
- US-A1- 2002 016 378
- US-A1- 2007 059 660
- US-A1- 2012 165 716
- US-B1- 6 514 075

## Description

### TECHNICAL FIELD

Disclosed herein is a flexible and/or adaptable light-emitting system useful for dental use. More precisely, this flexible and/or adaptable curing light system enables the curing of any light-activated materials in a manner of immediate contact, through which the light-activated material with even irregular shapes and/or curvature surfaces gets cured without air-inhibition at a curing surface.

### BACKGROUND

In the prior art, various light sources, such as Halogen bulbs, fluorescent bulbs, xenon bulbs, and plasma-arc lights, have been used for the purpose of curing a variety of light-activated materials. More recently, tremendous progress has been in light emitting diodes (LED's), thus LED was used as primary light source for various applications with widespread acceptance in dentistry.

Light-activated material formulations are composed of photopolymerizable resins, photoinitiator and other additive for shade, stability and handling property in addition to various fillers as key ingredient for mechanical reinforcement. Photopolymerization or photocuring has been known in a variety of industries, from UV curing of coating to lithographic printing. In dentistry, light curable materials, such as adhesive and composites, received tremendous progress in past 50 years. In order to precede such convenient material formation process, hand-hold light curing device was developed. L.D. Caulk Company developed the first curing light based UV light. Due to increasing health concerns over UV light, visible light curable compositions were developed, Accordingly, it triggered further development in curing light, from quartz-tungsten-halogen(QTH), to plasma arc, laser to light emitting diode (LED). Most recently high intensity LED was further developed.

USP 8,415,879 is directed to an exemplary printable composition of a liquid or gel suspension of diodes comprises a plurality of diodes, a first solvent and/or a viscosity modifier. An exemplary diode comprises: a light emitting or absorbing region having a diameter between about 20 and 30 microns and a height between 2.5 to 7 microns; a plurality of first terminals spaced apart and coupled to the light emitting region peripherally on a first side, each first terminal of the plurality of first terminals having a height between about 0.5 to 2 microns; and one second terminal coupled centrally to a mesa region of the light emitting region on the first side, the second terminal having a height between 1 to 8 microns.

USP 8,413,359 (April 9, 2013) is directed to an exemplary system having a power regulator and an emitting apparatus. The emitting apparatus is typically attached to or integrated with a display object, such as a merchandise package or container. A support structure, such as a point of purchase display, typically contains or supports one or more power regulators and display objects. The power regulator comprises a controller and a primary inductor, and the controller is adapted to provide a voltage or current to the primary inductor to generate a first primary inductor voltage. The emitting apparatus comprises an illumination source and a secondary inductor coupled to the illumination source. The illumination source is adapted to emit visible light when the power regulator is in an on state and when the secondary inductor is within a predetermined distance of the primary inductor. In exemplary embodiments, the first and second inductors are substantially planar,

USP 8,395,568 is directed to an electronic apparatus, such as a lighting device comprised of light emitting diodes (LEDs) or a power generating apparatus comprising photovoltaic diodes, which may be created through a printing process, using a semiconductor or other substrate particle ink or suspension and using a lens particle ink or suspension. An exemplary apparatus comprises a base; at least one first conductor; a plurality of substantially spherical or optically resonant diodes coupled to the at least one first conductor; at least one second conductor coupled to the plurality of diodes; and a plurality of substantially spherical lenses suspended in a polymer attached or deposited over the diodes. The lenses and the suspending polymer have different indices of refraction. In some embodiments, the lenses and diodes have a ratio of mean diameters or lengths between about 10:1 and 2:1. The diodes may be LEDs or photovoltaic diodes, and in some embodiments, have a junction formed at least partially as a hemispherical shell or cap.

US Publication No. 2012/0321864 is directed to an exemplary printable composition having a liquid or gel suspension of a plurality of metallic nanofibers or nanowires; a first solvent; and a viscosity modifier, resin, or binder. In various embodiments, the metallic nanofibers are between about 10 microns to about 100 microns in length, are between about 10 nm to about 120 nm in diameter, and are typically functionalized with a coating or partial coating of polyvinyl pyrrolidone or a similar compound. An exemplary metallic nanofiber ink that can be printed to produce a substantially transparent conductor comprises a plurality of metallic nanofibers; one or more solvents such as 1-butanol, ethanol, 1-pentanol, n-methylpyrrolidone, cyclohexanone, cyclopentanone, 1-hexanol, acetic acid, cyclohexanol, or mixtures thereof; and a viscosity modifier, resin, or binder such as polyvinyl pyrrolidone or a polyimide, for example.

US Publication No. 2012/0164797 is directed to an exemplary printable composition of a liquid or gel suspension of diodes having a plurality of diodes, a first solvent and/or a viscosity modifier. An exemplary method of fabricating an electronic device including depositing one or more first conductors; and depositing a plurality of diodes suspended in a mixture of a first solvent and a viscosity modifier. Various exemplary diodes have a lateral dimension between about 10 to 50 microns and about 5 to 25 microns in height. Other embodiments may also include a plurality of substantially chemically inert particles having a range of sizes between about 10 to about 50 microns.
WO2010/078581 discloses a phototherapy device. US 2002/0016378 discloses a method to cure a polymerizable material with various light sources.

### SUMMARY

The present invention relates to the subject matter of claims 1 to 12.

Disclosed herein are curing light systems that may be used to cure light-activated, formulated dental compositions such as adhesive, cements, composites or impression materials. More particularly, the inventions relate to novel curing light systems of various configurations that use thin-film type of LED as primary light source to provide curing light of a wavelength and power levels for achieving adequate and efficient curing on curable materials. Such thin-film type of LED could be produced as printed inorganic LED (microLED) and/or as organic LED (OLED).

Disclosed herein are thin-film type curing devices that would allow an immediate contact between a light-emitting surface and a curable surface of curable material, which would lead naturally a significant reduction in air-inhibition layer and also much high curing efficacy. More particular benefit is would allow immediate access to where those conventional curing lights hardly possible, including the so-called low profile LED curing light, as interproximal area, though different approaches were proposed such light-transmitting wedge or light-transparent matrix band, or a swing light tip as illustrated in following US patents from NthDegree Inc.

Resin-based formulated dental compositions useful in the field of dentistry for adhesion, sealing and restoration can be cured or hardened upon exposure to a source of radiation, in addition to self-curing. Such photoactive materials are known as "photo-curable dental compositions" and generally harden when exposed to radiation having wavelengths in the visible range. Photo-cured dental compositions are convenient for use by a dentist because the curing process can be initiated when the dental composition has been accurately placed in its proper position. A source of radiation energy positioned proximate to the material to be hardened, for example an appropriate amount of composition placed inside a tooth cavity, is activated to initiate polymerization and subsequent curing of the composition to secure the repair. Photo-curable dental materials have also been developed that are hardened by exposure to radiant energy in a preselected spectral range. Typically, a photo-activated chemical reaction in many photo-curable dental materials is initiated by application of a high intensity blue light having a wavelength of 400-500 nanometers. Since the light sources employed typically produce the entire visible light spectrum as well as some non-visible radiation, a reflector is coated to reflect only visible light, and the filters are selected to substantially block non-visible radiation and visible light other than blue light in the range of 400-500 nanometers, in order to produce the desired range of radiation.

Light curable dental compositions were initially hardened by the application of concentrated beams of ultraviolet (UV) radiation. In order to provide such UV radiation, dental guns and other apparatuses for producing concentrated beams of UV radiation were developed. Visible light curable dental compositions were used and dental radiation guns for producing concentrated visible light were provided. Laser-based radiation sources have also been employed, for example, a Nd YAG laser producing radiation at a wavelength of about 1060 nanometers, in combination with a frequency doubling material as disclosed.

All of these conventional curing light systems, though they are different each other in light intensity and/or light wavelength, they are same In term to location where to initiate the curing process: very top surface to receive the light, more particularly the light proceed in a flat 2D approaching the curing surface. Thus the actual light intensity fades rapidly depending upon the distance of light tip away from the curing surface. In order to make up such light loss in such manner, the high intensity curing light are getting more and more popular. However, the increasing light intensity can always lead to unwanted increase in both light heat and polymerization stress due to fast setting process. In addition, the tacky surface in these light curable materials due to air-inhibition is another intrinsic problem as cured under air.

A dental matrix system provides and takes the place of the proximal tooth surface that was removed to restore the proximal contours and contact to their normal shape and function, which include matrix band, retainer and wedge. Matrix bands are made from stainless steel or plastic. Automatrix system was also developed by eliminating retainer but stress ring was used to hole the preformed matrix band or sectional matrices.

For light curable materials, clear matrix band/sectional matrix and clear wedge are used to achieve better curing, especially in interproximal areas, where conventional flat curing light become much less efficient due to the limited tip excess even for those low profile Led as most advanced curing light. Thus the ultra-low profile of thin-film-based LED would revolutionize the dental curing approaches, because this technology allows clinicians doing their routine differently.

### BRIEF DESCRIPTION OF THE DRAWINGS

FIG. 1 shows a flexible LED Strip;
FIG. 2 shows a matrix band around a tooth;
FIG. 3a and 3b illustrate the flexibility and adaptation of flexible LED as light-emitting matrix band fitting inside a cylindrical cavity;
FIG. 4 shows a chart to present the light intensity of an experimental flexible LED strip vs conventional IQ2 LED light; and
FIG. 5 is a chart to present Barcol hardness of TPH3/A2 as cured by the flexible LED strip and conventional LED.

### DETAILED DESCRIPTION

Disclosed herein is a flexible and/or adaptable light-emitting system useful for dental use. More precisely, this flexible and/or adaptable curing light system enables the curing of any light-activated materials in a manner of immediate contact, through which the light-activated material with even irregular shapes and/or curvature surfaces gets cured without air-inhibition at a curing surface. More specifically such a curing light system includes a thin LED film as a light source, which may be an organic LED and/or a plurality of inorganic micro-LEDs printed onto a variety of flexible substrates, like polymers, metal foils or hybrid materials in the form of a matrix band.

The curing light systems disclosed herein provide a new way to achieve efficient curing of light-activated composition with minimum curing heat, reduced polymerization stress and reduced air-inhibition by using a thin-film type of curing light system (10), which is composed of printed micro-LED (1) on top of a flexible substrate (3), such as a flexible and elastic polymer, metal foils, a hybrid substrates, or the like.

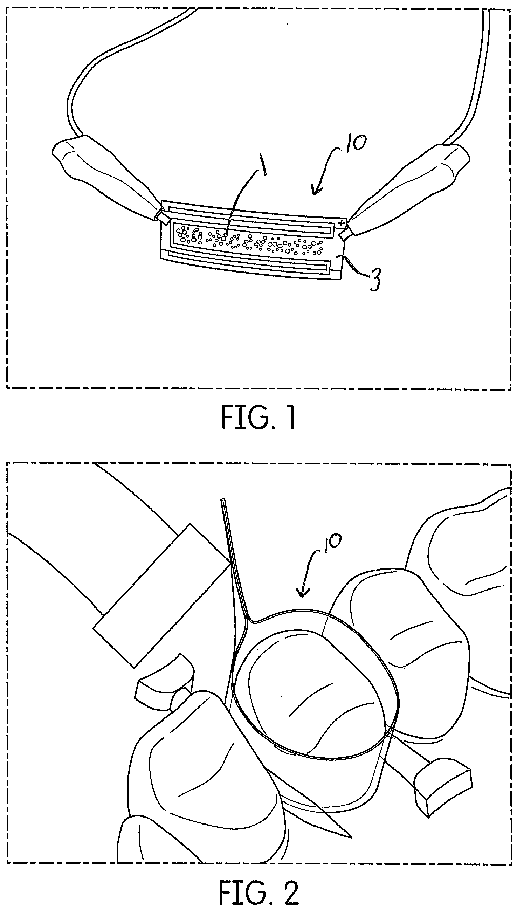

As shown in Figure 2, by using such flexible LED, a light-emitting matrix band (10) could be developed and efficient interproximal curing should be achieved without air-inhibition.

By sung such flexible LED, any curve curing surface could be readily thermal formal to adapted well the curing objective to achieved 3D curing, from which polymerization stress should be more effectively managed.

By using such flexible LED, light-emitting impression tray could be fabricated via thermal formation or applied the self-adhering LED on to the inner surface of any conventional tray for use as preloaded impression tray.

This invention can be more fully understood from the following detailed description thereof taken in connection with the accompanying drawings which form a part of this application.

### Exemplary Evidence

The curing light system disclosed herein includes various embodiments of light systems useful for curing light-activated, formulated materials, principally by polymerizing monomers into durable polymers. The curing light systems have application in a variety of fields, including but not limited to medicine and dentistry where composite materials with a photoinitiator are used. The photoinitiator absorbs light of a particular wavelength and causes polymerization of the monomers into polymers.

The following examples are given to help a complete understanding of this invention and are provided herein for purposes of illustration only and are not intended to be limiting in any manner.

As shown in the art, printed LED could be fabricated onto a variety of substrates for proper applications. The density of microLED and size of light-emitting area could be readily tailored.

In Figure 1, the total light intensity is measured by a MARC resin calibrator. Such thin-film type curing systems exhibit a very low intensity, such as from about 10 mW/cm² to about 40 mW/cm².

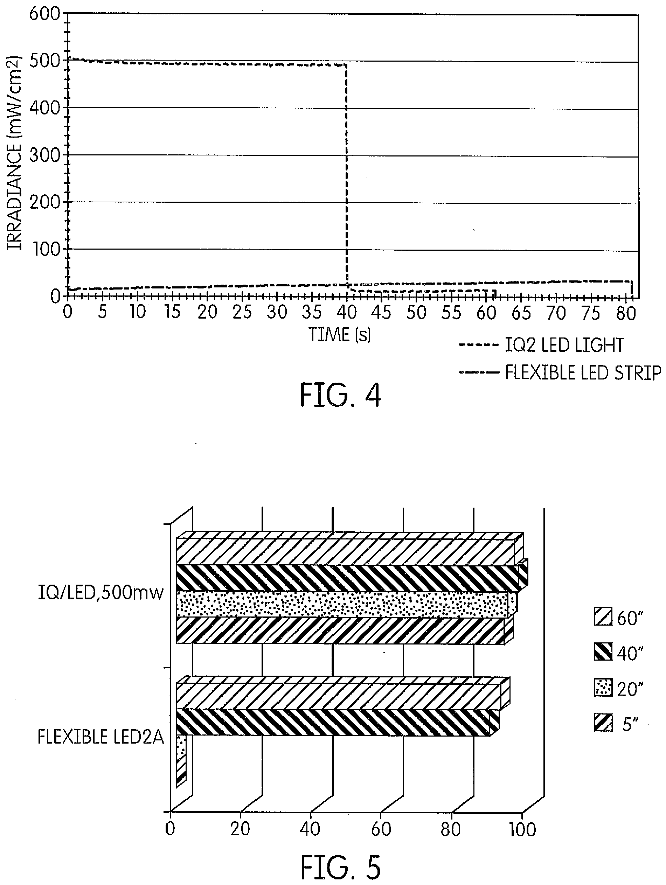

In order to demonstrate the curability to light-activated, formulated dental compositions, a conventional dental composite, DENTSPLY/Caulk, TPH3 shade A2, was exposed to the flexible LED curing light system disclosed herein in a Teflon mold. After a variety of light exposure from 5 minutes to 60 minutes, the hardness of the top surface, directly contacting the flexible LED was measured as showed in Figure 4. Depending upon the driving power, a 20 minute to 40 minute exposure to this flexible LED, a hardness comparable to 5 minutes of conventional LED(500mW/cm2) could be achieved.

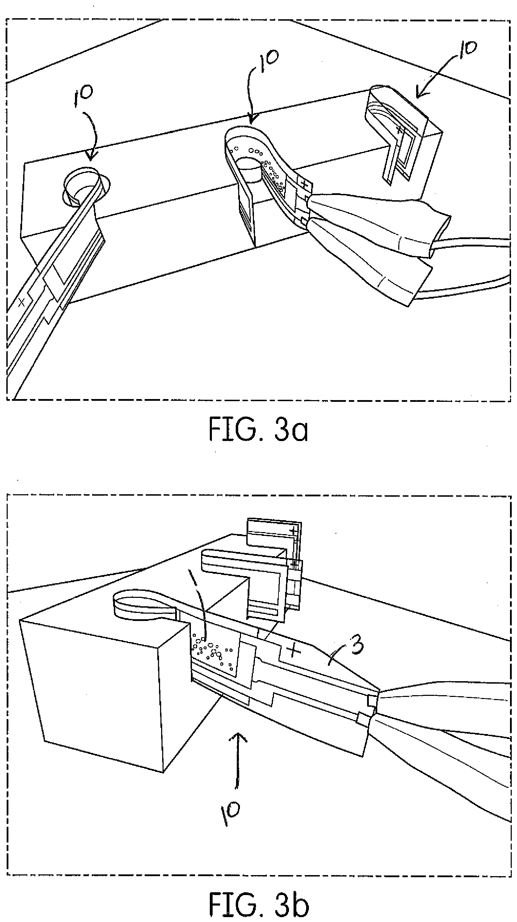

As illustrated in Figures 3 and 3b, the flexible nature of such flexible LED would allow it adapt well in any curvature, including a human tooth, in order to achieve contact curing.

### Tests and Results

Light Intensity measurement: by using MARC Resin Calibrator, MARC™-RC, (BlueLight Analytical Inc). A cosine corrector sensor (3.9 mm in diameter) was fixed within the MARC™-RC, which connected to the spectrometer (USB4000™ spectrometer, Ocean Optics). It was configured to the optimized specifications to measure wavelengths between 360 - 540 nm. The curing light was placed onto the sensor surface and light irradiance was recorded through the time.

Four IQ2 LED lights (DENTSPLY/Caulk), a single-mode absorption of 430-500nm with maximum at 463nm. The maximum intensity is 508 mW/cm² was used; and

Four Flexible LED strips (NthDegree) with a low intensity, a maximum of about 40mW/cm², with 80 seconds of light irradiation and absorption spectrum was measurable.

Barcol hardness measurement: a conventional universal dental composite, TPH3/A2 (Dentsply/Caulk), was cured by using these two LED lights. The top surface hardness was measured by using a medium barcol hardness tester. All specimens were cured in a φ5mmx1mm as one side, contact curing only. The hardness of the top surface (contact surface) was measured immediately after cure with variable curing times of 5 minutes, 20 minutes, 40 minutes and 60 minutes, respectively. As shown in Figure 5, a 20 minute curing time with a flexible LED Strip did not yield enough strength for hardness measurement but a 40 minute curing time did yielded a cured structure with a hardness comparable to that as cured for 5 minutes with IQ2 LED light. Such a result is indeed very impressive for its extremely low initial intensity. However, no depth of cure was evaluated at this point since much lower light penetration is expected from a flexible LED.

Further improvement in both light intensity and the dispersion uniformity is needed for such flexible LED, from which enhanced hardness and improved depth of cure should be expected. In addition, for the specific application as light-emitting matrix band, a flexible LED with effective light-emitting width of 10mm is also needed.

## Claims

1. A dental curing light system (10) comprising:
a. a thin-film-based light emitting diode (LED) semiconductor (1) printed onto a flexible substrate (3) with power leads, which substrate (3) is in the form of a matrix band,
b. a detachable battery power source capable of being connected to the power leads of the thin-film LED semiconductor (1), and
c. an electronic control circuitry.

2. A dental curing light system (10) as in claim 1 wherein said LED semiconductor (1) is a micro LED array printed onto the substrate (3).

3. A dental curing light system (10) as in claim 1, wherein the LED semiconductor (1) is an organic LED in thin-film form.

4. A dental curing light system (10) as in claim 1, wherein the battery power source is an electric power source with a power adapter.

5. A dental curing light system (10) as in claim 1, wherein the power source includes an electronic control circuitry system with a timer and a driving power control.

6. A dental curing light system (10) as in claim 1, wherein the thin-film LED is printed on a self-adhesive substrate and is capable of being peeled off from the substrate and is capable of being reapplied onto a different preformed substrate.

7. A dental curing light system (10) as in claim 1, wherein the thin-film LED is thermally and mechanically preformed.

8. A dental curing light system (10) as in claim 1, wherein the dental curing light system is formed in a 3D curing chamber in order to deliver a 3D curing.

9. A dental curing light system (10) as in claim 6, wherein the self-adhering flexible matrix band can be applied onto orthodontic brackets for full arch curing.

10. A dental curing light system (10) as in claim 2, wherein the printed microLED array is in a variety of patterns for polymerization stress management.

11. A dental curing light system (10) as in claim 2, wherein the printed microLED array is in a variety of density for improved curing efficacy.

12. A dental curing light system (10) as in claim 2, wherein the printed microLED array includes a variety of wavelengths for emitting lights.

## Patentansprüche

1. Dentalaushärtelichtsystem (10), umfassend:
a. einen dünnschichtbasierten Leuchtdioden- (LED) - Halbleiter (1), der mit Stromzuführungen auf ein flexibles Substrat (3) gedruckt ist, wobei das Substrat (3) die Form eines Matrizenbandes aufweist,
b. eine abnehmbare Batteriestromquelle, die mit den Stromzuführungen des Dünnschicht-LED-Halbleiters (1) verbunden werden kann, und
c. eine elektronische Steuerschaltung.

2. Dentalaushärtelichtsystem (10) nach Anspruch 1, wobei der LED-Halbleiter (1) ein auf das Substrat (3) gedrucktes Mikro-LED-Array ist.

3. Dentalaushärtelichtsystem (10) nach Anspruch 1, wobei der LED-Halbleiter (1) eine organische LED in Dünnschichtform ist.

4. Dentalaushärtelichtsystem (10) nach Anspruch 1, wobei die Batteriestromquelle eine elektrische Stromquelle mit einem Stromadapter ist.

5. Dentalaushärtelichtsystem (10) nach Anspruch 1, wobei die Stromquelle ein elektronisches Steuerschaltungssystem mit einem Zeitgeber und einer Ansteuerstromsteuerung umfasst.

6. Dentalaushärtelichtsystem (10) nach Anspruch 1, wobei die Dünnschicht-LED auf ein selbsthaftendes Substrat gedruckt ist und von dem Substrat abgelöst und auf ein unterschiedliches vorgebildetes Substrat wieder aufgebracht werden kann.

7. Dentalaushärtelichtsystem (10) nach Anspruch 1, wobei die Dünnschicht-LED thermisch und mechanisch vorgebildet ist.

8. Dentalaushärtelichtsystem (10) nach Anspruch 1, wobei das Dentalaushärtelichtsystem in einer 3D-Aushärtekammer gebildet ist, um ein 3D-Aushärten auszuführen.

9. Dentalaushärtelichtsystem (10) nach Anspruch 6, wobei das selbsthaftende flexible Matrizenband zum Aushärten des gesamten Zahnbogens auf kieferorthopädische Klammern aufgebracht werden kann.

10. Dentalaushärtelichtsystem (10) nach Anspruch 2, wobei das gedruckte MikroLed-Array für ein Polymerisationsspannungsmanagement eine Vielzahl von Mustern aufweist.

11. Dentalaushärtelichtsystem (10) nach Anspruch 2, wobei das gedruckte MikroLed-Array für eine verbesserte Aushärteeffizienz in einer Dichtevielzahl vorliegt.

12. Dentalaushärtelichtsystem (10) nach Anspruch 2, wobei das gedruckte MikroLed-Array eine Vielzahl von Wellenlängen zum Emittieren von Lichtern umfasst.

## Revendications

1. Système de photodurcissement dentaire (10) comprenant :
a. un semi-conducteur à diode électroluminescente (LED) à base de couche mince (1) imprimé sur un substrat flexible (3) avec des conducteurs d'alimentation, ce substrat (3) se présentant sous la forme d'une bande matricielle,
b. une source d'alimentation de batterie détachable pouvant être connectée aux conducteurs d'alimentation du semi-conducteur LED à couche mince (1), et
c. un circuit de commande électronique.

2. Système de photodurcissement dentaire (10) selon la revendication 1, dans lequel ledit semi-conducteur LED (1) est un réseau de micro-LED imprimé sur le substrat (3).

3. Système de photodurcissement dentaire (10) selon la revendication 1, dans lequel le semi-conducteur LED (1) est une LED organique sous forme de film mince.

4. Système de photodurcissement dentaire (10) selon la revendication 1, dans lequel la source d'alimentation par batterie est une source d'alimentation électrique avec un adaptateur d'alimentation.

5. Système de photodurcissement dentaire (10) selon la revendication 1, dans lequel la source d'alimentation inclut un système de circuit de commande électronique avec une minuterie et une commande de puissance d'entraînement.

6. Système de photodurcissement dentaire (10) selon la revendication 1, dans lequel la LED à film mince est imprimée sur un substrat auto-adhésif et est capable de se décoller du substrat et est capable d'être réappliquée sur un substrat préformé différent.

7. Système de photodurcissement dentaire (10) selon la revendication 1, dans lequel la LED à film mince est préformée thermiquement et mécaniquement.

8. Système de photodurcissement dentaire (10) selon la revendication 1, dans lequel le système de photodurcissement dentaire est formé dans une chambre de durcissement 3D afin de fournir un durcissement 3D.

9. Système de photodurcissement dentaire (10) selon la revendication 6, dans lequel la bande de matrice flexible auto-adhésive peut être appliquée sur des appareils dentaires orthodontiques pour un durcissement complet de l'arcade dentaire.

10. Système de photodurcissement dentaire (10) selon la revendication 2, dans lequel la matrice de micro-LED imprimée est dans une variété de motifs pour la gestion des contraintes de polymérisation.

11. Système de photodurcissement dentaire (10) selon la revendication 2, dans lequel la matrice de micro-LED imprimée est dans une variété de densité pour une efficacité de polymérisation améliorée.

12. Système de photodurcissement dentaire (10) selon la revendication 2, dans lequel la matrice de micro-LED imprimée inclut une variété de longueurs d'onde pour émettre de la lumière.
